# EUROPEAN PATENT APPLICATION

(11) **EP 1 953 057 A2**
(43) Date of publication of application: **06.08.2008**
(21) Application number: 08250305.3
(22) Date of filing: 24.01.2008
(51) Int. Cl.: B60W 30/14, B60W 30/18, B60W 10/02, B60W 10/06, B60W 10/10, F16H 61/14, F16H 61/21

(54) **Control apparatus and control method for vehicle**

(30) Priority: 31.01.2007 JP 2007021695
(71) Applicant: Toyota Jidosha Kabushiki Kaisha, Toyota-shi, Aichi-ken 471-8571 (JP)
(72) Inventor: Sawada, Hiroyuki, Toyota-shi Aichi-ken 471-8571 (JP); Kono, Katsumi, Toyota-shi Aichi-ken 471-8571 (JP); Kaigawa, Masato, Toyota-shi Aichi-ken 471-8571 (JP)
(74) Representative: Albutt, Anthony John

(57) **Abstract**

A control apparatus (3, 4) for a vehicle, which uses both of a deceleration increase control and a vehicle speed adjustment control, prohibits execution of the deceleration increase control, when there is a possibility that hunting, in which execution and stop of the deceleration increase control are repeated, may be caused during the vehicle speed adjustment control.

## Description

### BACKGROUND OF THE INVENTION

### 1. Field of the Invention

The invention relates to a control apparatus and control method for a vehicle with an automatic transmission.

### 2. Description of the Related Art

In a recent automatic transmission with a torque converter, a lock-up clutch is generally provided to directly connect the input side (pump impeller side) to the output side (turbine runner side) in the torque converter.

When the lock-up clutch is engaged, the input side (pump impeller side) is directly connected to the output side (turbine runner side) in the torque converter. When the lock-up clutch is disengaged, the input side is separated from the output side in the torque converter. Further, a slip control that slips the lock-up clutch of the torque converter may be executed by placing the lock-up clutch of the torque converter in a semi-engaged state that is between the engaged state and the disengaged state.

This slip control is started when a predetermined condition (a condition set using a vehicle speed, an accelerator pedal operation amount, and the like) is satisfied. The power transmission state of the torque converter is managed by executing a feedback control so that an engagement force for the lock-up clutch is equal to a predetermined value, based on the difference between the rotational speed of the pump impeller of the torque converter, which is corresponding to an engine speed, and the rotational speed of the turbine runner of the torque converter.

Example of the case where the slip control is used will be briefly described.

In general, when a vehicle is decelerated, fuel supply is cut off, that is, the supply of fuel from an injector is stopped to improve fuel efficiency. The fuel supply cutoff is stopped when an engine speed is decreased to a threshold value or lower.

If the lock-up clutch of the torque converter is disengaged when the vehicle is decelerated, a loss of torque (rotational power) transmitted from the output side to the input side in the torque converter is caused. Thus, the effect of engine brake is weak. Therefore, conventionally, the lock-up clutch is engaged to increase the effect of the engine brake when the vehicle is decelerated.

In this case, when the fuel supply cutoff is started during the deceleration of the vehicle, the engine speed and the vehicle speed are sharply decreased due to the strong effect of the engine brake. Thus, the engine speed reaches the threshold value for stopping the fuel supply cutoff in a relatively short time. This reduces the effect of improving the fuel efficiency.

In this regard, the threshold value for stopping the fuel supply cutoff may be set to the lowest possible value to extend the period in which the fuel supply is cut off. However, if the threshold value for stopping the fuel supply cutoff is set to an extremely low value, the engine is likely to stall, which is undesirable.

Accordingly, Japanese Patent Application Publications No. 2004-347004 (JP-A-2004-347004) and No. 8-109962 (JP-A-8-109962) describe the slip control for the lock-up clutch, which decreases the rate at which the engine speed is decreased, thereby increasing the time required for the engine speed to decrease to the threshold value for stopping the fuel supply cutoff.

The combination of the fuel supply cutoff control and the slip control is referred to as, for example, "deceleration flex lock-up control".

Japanese Patent Application Publication No. 2001-329882 (JP-A-2001-329882) describes a so-called vehicle speed adjustment control that limits the actual traveling speed of a vehicle, that is, the actual vehicle speed to a predetermined target vehicle speed or lower.

In the vehicle speed adjustment control, when the actual vehicle speed is increased to the target vehicle speed, a deceleration control is executed. For example, the deceleration control is executed by placing a throttle valve in a substantially completely closed position, that is, idling position, or by executing a fuel supply cutoff control, that is, by stopping the supply of fuel from an injector.

If a vehicle user releases an accelerator pedal at this time, the actual vehicle speed is gradually decreased. However, if the vehicle user continuously depresses the accelerator pedal, the actual vehicle speed is decreased, and then, maintained at the target vehicle speed.

In this control for maintaining the vehicle speed at the target vehicle speed, when the actual vehicle speed is decreased to a lower limit vehicle speed (that is set to be lower than the target vehicle speed by a predetermined amount) due to the deceleration control, an acceleration control is resumed according to the depression amount of the accelerator pedal. Thus, the actual vehicle speed is increased toward the target vehicle speed.

That is, if the vehicle user continuously depresses the accelerator pedal even after the actual vehicle speed is increased to the target vehicle speed, the actual vehicle speed is decreased and increased toward the target vehicle speed, and thus, the vehicle speed converges to the target vehicle speed.

Due to this fluctuation of the vehicle speed, driveability may be decreased, for example, the vehicle may travel unstably. Therefore, the difference between the target vehicle speed and the lower limit vehicle speed for maintaining the vehicle speed is minimized to suppress the fluctuation of the vehicle speed.

Japanese Patent Application Publication No. 2003-329882 (JP-A-2003-329882) describes a technology in which a target vehicle speed can be adjusted to any vehicle speed by a vehicle user in the vehicle speed adjustment control.

When both of the deceleration flex lock-up control described in the above publications No. 2004-347004 and No. 8-109962, and the vehicle speed adjustment control described in the publications No. 2001-329882 and No. 2003-329882 are used, improvement needs to be made as described below.

During the vehicle speed adjustment control, when the actual vehicle speed is increased to the target vehicle speed, the deceleration control is executed, and therefore, the vehicle speed is decreased, even if the vehicle user continuously operates the accelerator pedal.

If the deceleration flex lock-up control is executed due to the deceleration control, the effect of the engine brake is increased, and therefore, the time required for the actual vehicle speed to decrease to the lower limit vehicle speed for maintaining the vehicle speed is short, as compared to the case where the deceleration flex lock-up control is not executed.

Therefore, if the vehicle user continuously depresses the accelerator pedal as described above, the acceleration control is resumed quickly, and thus, the deceleration control and the acceleration control are repeated in a short cycle, as compared to the case where only the vehicle speed adjustment control is executed. Accordingly, the phenomenon, in which the vehicle speed and the torque (drive power) fluctuate in a short cycle, continues over a long period. As a result, the driveability may be decreased, for example, the behavior of the vehicle may be unstable.

Thus, when both of the deceleration flex lock-up control and the vehicle speed adjustment control are used, it is necessary to devise a technology for improving the coordination of the both controls.

Japanese Patent Application Publication No. 8- 109962 (JP-A-8-109962) describes a system in which an automatic cruise control that maintains a vehicle speed at a constant vehicle speed, and an engagement control for a lock-up clutch of an automatic transmission are executed. In the system, the engagement control for the lock-up clutch is restricted during the automatic cruise control. However, fuel supply cutoff is not taken into account.

### SUMMARY OF THE INVENTION

The invention provides a control apparatus and control method for a vehicle with an automatic transmission, which improves coordination of a deceleration increase control and a vehicle speed adjustment control when both of the controls are used, thereby providing good driveability.

A first aspect of the invention relates to a control apparatus for a vehicle with an automatic transmission. The control apparatus includes deceleration increase control means for executing a deceleration increase control that increases deceleration according to need, when the vehicle is decelerated; vehicle speed adjustment control means for executing a vehicle speed adjustment control that includes a deceleration control and an acceleration control to maintain a vehicle speed at a predetermined target vehicle speed, according to a request; and management means for prohibiting execution of the deceleration increase control, when an execution prohibition condition for prohibiting the execution of the deceleration increase control is satisfied during the vehicle speed adjustment control executed by the vehicle speed adjustment control means, wherein the execution prohibition condition relates to hunting in which the execution and stop of the deceleration increase control are repeated.

In the above-described aspect, the execution prohibition condition may be satisfied, when the management means determines that there is a possibility that the hunting may be caused, based on a current vehicle speed and a current road load.

In the above-described configuration, when the vehicle is decelerated during traveling of the vehicle, the deceleration increase control means makes it possible to increase the effect of engine brake. Also, the vehicle speed adjustment control means makes it possible to drive the vehicle in such a manner that the vehicle speed is maintained at the target vehicle speed during traveling of the vehicle.

In the above-described configuration, when it is determined that there is a possibility that a phenomenon, in which execution and stop of the deceleration increase control are repeated, may be caused, that is, the hunting of the deceleration increase control may be caused, the execution of the deceleration increase control is prohibited. This prevents a problem that may occur in the case where the deceleration increase control is executed due to the deceleration control when the vehicle speed is increased to the target vehicle speed during the vehicle speed adjustment control, and the deceleration increase control is stopped when the acceleration control is executed again after the vehicle speed is decreased due to the deceleration control.

Thus, because the execution of the deceleration increase control is prohibited when the deceleration control is executed in a process for maintaining the vehicle speed at the target vehicle speed, the deceleration is not increased. Therefore, although the deceleration control and the acceleration control are repeated in the process for maintaining the vehicle speed at the target vehicle speed, it is possible to stop the repetition of the deceleration control and the acceleration control relatively quickly.

When the execution of the deceleration increase control is permitted during the vehicle speed adjustment control, the phenomenon, in which the vehicle speed and the torque (drive power) greatly fluctuate in a short cycle, may continue over a long period. However, in the above-described configuration, it is possible to prevent this problem. As a result, the behavior of the vehicle is stabilized, and good driveability is provided.

As generally known, the "road load" signifies a traveling load that includes "air resistance, rolling resistance, gradient resistance, and the like". Information regarding the air resistance and the rolling resistance is created in advance as fixed information based on the outer shape, weight, vehicle speed, and the like, which are inherent to the vehicle to be controlled. Information regarding the gradient resistance is created in advance as fixed information showing the correlation between the gradient of a traveling road and the traveling resistance of the vehicle. Each information is written in the storage area of the vehicle control apparatus.

In the above-described configuration, when the management means determines that there is no possibility that the hunting may be caused, the management means may check whether there is a history showing that the execution of the deceleration increase control has been prohibited during current execution of the vehicle speed adjustment control; when the management means determines that there is the history showing that the execution of the deceleration increase control has been prohibited during the current execution of the vehicle speed adjustment control, the management means may check whether a predetermined prohibition cancel condition for canceling prohibition of the execution of the deceleration increase control is satisfied; when the predetermined prohibition cancel condition is satisfied, the management means may cancel the prohibition of the execution of the deceleration increase control; and when the predetermined prohibition cancel condition is not satisfied, the management means may continue to prohibit the execution of the deceleration increase control.

In the above-described configuration, the execution prohibition condition for prohibiting the execution of the deceleration increase control, and the prohibition stop condition for stopping the prohibition of the execution of the deceleration increase control are separately set to obtain a hysteresis effect. Therefore, for example, when the execution prohibition condition is satisfied, and then, the execution prohibition condition is unsatistied, it is possible to avoid the situation where the prohibition of the execution of the deceleration increase control is canceled immediately.

If it is determined whether the execution of the deceleration increase control should be prohibited or the prohibition of the execution of the deceleration increase control should be canceled using only the execution prohibition condition, the result of the determination may be frequently inverted depending on the situation when the determination is performed. However, in the above-described configuration, it is possible to prevent the result of the determination from being frequently inverted. ln the above-described aspect, the execution prohibition condition may be satisfied, when the management means determines that an action, in which the deceleration increase control is executed due to the deceleration control during the vehicle speed adjustment control, and then the deceleration increase control is stopped due to switching from the deceleration control to the acceleration control, is repeated at least a predetermined number of times.

In this configuration, as the condition for prohibiting the execution of the deceleration increase control, the number of times that the action of executing and stopping the deceleration increase control is actually repeated is checked. Therefore, it is possible to appropriately execute the vehicle speed adjustment control according to the actual traveling state of the vehicle.

In the above-described aspect, the execution prohibition condition may be satisfied, when the vehicle speed adjustment control is executed.

In the above-described configuration, when the vehicle is decelerated during the traveling of the vehicle, the deceleration increase control means makes it possible to increase the effect of engine brake. Also, the vehicle speed adjustment control means makes it possible to drive the vehicle in such a manner that the vehicle speed is maintained at the target vehicle speed during traveling of the vehicle.

A second aspect of the invention relates to a control apparatus for a vehicle with an automatic transmission. The control apparatus includes deceleration increase control means for executing a deceleration increase control that increases deceleration according to need, when the vehicle is decelerated; vehicle speed adjustment control means for executing a vehicle speed adjustment control that includes a deceleration control and an acceleration control to maintain a vehicle speed at a predetermined target vehicle speed, according to a request; and management means for prohibiting execution of the deceleration increase control, when an execution prohibition condition for prohibiting the execution of the deceleration increase control is satisfied during the vehicle speed adjustment control executed by the vehicle speed adjustment control means, wherein the execution of the deceleration increase control is prohibited when the vehicle speed adjustment control is executed. Therefore, if the deceleration control and the acceleration control are repeated during the process for maintaining the vehicle speed at the target vehicle speed, it is possible to stop this phenomenon relatively quickly.

When the execution of the deceleration increase control is permitted during the vehicle speed adjustment control, the phenomenon, in which the vehicle speed and the torque (drive power) greatly fluctuate in a short cycle, may continue over a long period. However, in the above-described configuration, it is possible to prevent this problem. As a result, the behavior of the vehicle is stabilized, and good driveability is provided.

In the above-described configuration, the automatic transmission may include a torque converter provided with a lock-up clutch; the deceleration increase control means may execute a deceleration flex lock-up control; and in the deceleration flex lock-up control, when the vehicle is decelerated, a fuel supply cutoff control may be executed to stop supply of fuel to an engine of the vehicle, and a slip control for the lock-up clutch may be executed to control a rate at which an engine speed is decreased, and when the engine speed is decreased to a predetermined threshold value, the fuel supply cutoff control and the slip control may be stopped.

In summary, in this configuration, the deceleration increase control means executes the specific control, that is, the deceleration flex lock-up control.

Because the deceleration increase control means executes the deceleration flex lock-up control, when the vehicle is decelerated during the traveling of the vehicle, it is possible to reduce wasteful fuel consumption, and to appropriately apply engine brake using the deceleration flex lock-up control.

In the above-described configuration, because the execution of the deceleration flex lock-up control is prohibited when the vehicle speed adjustment control is executed, the cycle, in which the deceleration control and the acceleration control are repeated, is made as long as possible during the process for maintaining the vehicle speed at the target vehicle speed.

When the execution of the deceleration increase control is permitted during the vehicle speed adjustment control, the phenomenon, in which the vehicle speed and the torque greatly fluctuate in a short cycle, may occur. However, in the above-described configuration, it is possible to prevent this problem. As a result, the behavior of the vehicle is stabilized, and good driveability is provided.

The above-described deceleration increase control means may execute the deceleration flex lock-up control, may execute only a fuel supply cutoff control to stop supply of fuel from an injector that supplies the fuel to the engine, or may execute only a lock-up control to execute a slip control for a lock-up clutch provided in a torque converter of the automatic transmission.

In the above-described configuration, when the vehicle speed reaches the predetermined target vehicle speed during a process in which the vehicle speed is increased due to an operation of an accelerator pedal of the vehicle, the vehicle speed adjustment control means may execute the deceleration control to decrease the vehicle speed; and if the accelerator pedal is continuously operated when the vehicle speed is decreased to a lower limit vehicle speed for maintaining the vehicle speed, which is set to be lower than the target vehicle speed, due to the deceleration control, the vehicle speed adjustment control means may execute the acceleration control to increase the vehicle speed to the target vehicle speed according to an operation amount of the accelerator pedal.

In summary, in this configuration, the vehicle speed adjustment control means executes the specific control, that is, a so-called speed limiter control that limits the vehicle speed to the target vehicle speed or lower, and maintains the vehicle speed at the target vehicle speed according to the operation of the accelerator pedal.

Because the vehicle speed adjustment control means executes the speed limiter control, it is determined whether the control should be switched from the deceleration control to the acceleration control, based on whether the accelerator pedal is operated when the vehicle speed reaches the lower limit vehicle speed for maintaining the vehicle speed during the process for maintaining the vehicle speed at the target vehicle speed.

In the above-described aspect, the vehicle speed adjustment control means may execute the deceleration control and the acceleration control by controlling a throttle valve that adjusts an amount of air taken into an engine of the vehicle. The vehicle speed adjustment control means may execute the deceleration control and the acceleration control by controlling an injector that adjusts an amount of fuel supplied to an engine of the vehicle.

A third aspect of the invention relates to a control method for a vehicle with an automatic transmission. The control method includes executing a deceleration increase control that increases deceleration according to need, when the vehicle is decelerated; executing a vehicle speed adjustment control that includes a deceleration control and an acceleration control to maintain a vehicle speed at a predetermined target vehicle speed, according to a request; and prohibiting execution of the deceleration increase control, when an execution prohibition condition for prohibiting the execution of the deceleration increase control is satisfied during the vehicle speed adjustment control, wherein the execution prohibition condition relates to hunting in which the execution and stop of the deceleration increase control are repeated.

According to the invention, the execution of the deceleration increase control is prohibited when the deceleration control is executed during the vehicle speed adjustment control. Therefore, it is possible to avoid the situation where the phenomenon, in which the vehicle speed and the torque (drive power) greatly fluctuate in a short cycle, may continue over a long period during the process for maintaining the vehicle speed at the target vehicle speed. Thus, according to the invention, the behavior of the vehicle is stabilized, and good driveability is provided.

### BRIEF DESCRIPTION OF THE DRAWINGS

The foregoing and further objects, features and advantages of the invention will become apparent from the following description of example embodiments with reference to the accompanying drawings, wherein like numerals are used to represent like elements and wherein:
FIG. 1 is a schematic configuration diagram showing a power train of a vehicle, which is controlled by a control apparatus for a vehicle according to an embodiment of the invention;
FIG. 2 is a skeleton diagram showing an example of a shift mechanism portion in an automatic transmission shown in FIG. 1;
FIG. 3 is an engagement table showing an engaged state/disengaged state of each of clutches, brakes, and one-way clutches in the shift mechanism portion in FIG. 2 at each gear;
FIG. 4 is a schematic configuration diagram showing an engine control device and a transmission control device in FIG. 1;
FIG. 5 is a flowchart used to describe operations of the control apparatus for a vehicle according to the embodiment of the invention;
FIG. 6 is a graph showing a map in which a vehicle speed and the gradient of a traveling road are used as parameters, and vehicle speed-road load curves are set;
FIGS. 7A to 7D are time charts used to describe the operations of the control apparatus for a vehicle according to the embodiment;
FIGS. 8A to 8D are time charts used to describe operations in a comparative example;
FIG 9 is a flowchart used to describe operations in a modified example of the embodiment of the invention; and
FIG. 10 is a flowchart used to describe operations in another modified example of the invention.

### DETAILED DESCRIPTION OF EMBODIMENTS

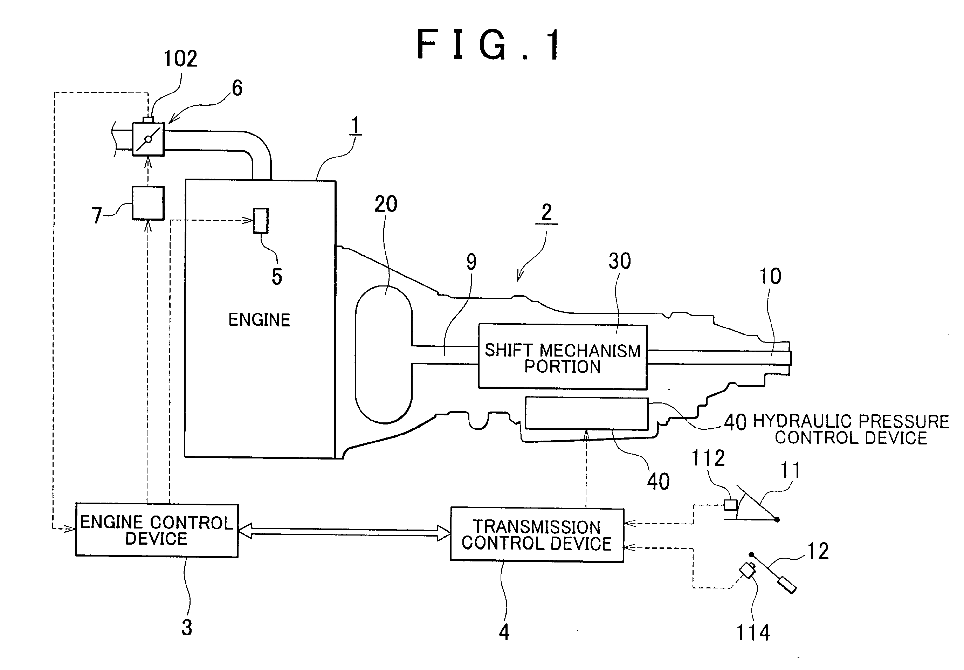

Hereinafter, an embodiment and modified examples of the invention will be described in detail with reference to FIG. 1 to FIG. 10. FIG 1 to FIG. 8D show a first embodiment of the invention.

First, before describing the features of the invention, a power train of a vehicle, which is controlled by a control apparatus for a vehicle according to the embodiment of the invention, will be described.

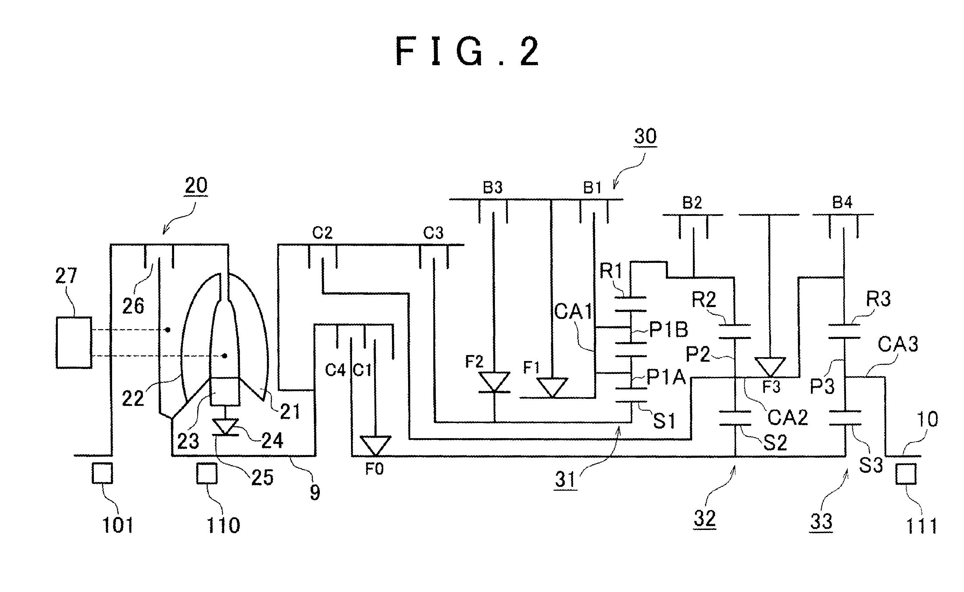

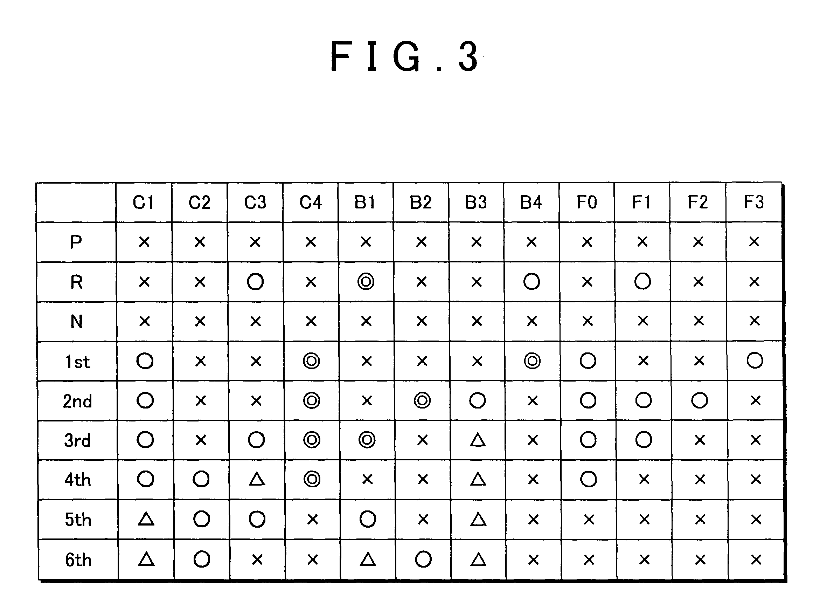

FIG. 1 is a schematic configuration diagram showing the power train of the vehicle, which is controlled by the control apparatus for a vehicle according to the embodiment of the invention. FIG. 2 is a skeleton diagram showing an example of a shift mechanism portion in an automatic transmission. FIG. 3 is an engagement table showing the engaged state/disengaged state of each clutch and each brake in the shift mechanism portion at each gear.

As shown in FIG. 1, the vehicle controlled by the control apparatus for a vehicle according to the embodiment of the invention includes an engine 1, an automatic transmission 2, an engine control device 3, and a transmission control device 4.

In the engine 1, air-fuel mixture, which is formed by mixing air taken from the outside and fuel injected from an injector 5 at an appropriate ratio, is burned to generate rotational power. A throttle valve 6 adjusts the amount of intake air. The throttle valve 6 is driven by an electric actuator 7. The opening amount of the throttle valve 6 is adjusted by driving the actuator 7 based on the depression amount of an accelerator pedal 11, and control requirements. The engine control device 3 controls the injector 5 and the actuator 7.

The automatic transmission 2 changes the speed of the rotational power input to the input shaft 9 from the engine 1, and then, outputs the rotational power to the output shaft 10. The automatic transmission 2 mainly includes a torque converter 20, a shift mechanism portion 30, and a hydraulic pressure control device 40.

The torque converter 20 is connected to the engine 1. As shown in FIG. 2, the torque converter 20 includes a pump impeller 21, a turbine runner 22, a stator 23, a one-way clutch 24, a stator shaft 25, and a lock-up clutch 26.

The lock-up clutch 26 directly connects the pump impeller 21 to the turbine runner 22 in the torque converter 20. The lock-up clutch 26 is placed in an engaged state, a disengaged state, or a semi-engaged stated that is between the engaged state and the disengaged state, according to need. When the lock-up clutch 26 is in the engaged state, the pump impeller 21 (input side) is connected directly to the turbine runner 22 (output side). When the lock-up clutch 26 is in the disengaged state, the pump impeller 21 is separated from the turbine runner 22.

The engagement force for the lock-up clutch 26 is controlled by controlling hydraulic pressures for the pump impeller 21 (input side) and the turbine runner 22 (output side) using a lock-up control valve 27.

As shown in FIG. 2, the shift mechanism portion 30 mainly includes a first planetary gear unit 31, a second planetary gear unit 32, a third planetary gear unit 33, clutches C1 to C4, brakes B1 to B4, and one-way clutches F0 to F3. In the embodiment, the shift mechanism portion 30 may be shifted to any one of six forward gears and one reverse gear.

The first planetary gear unit 31 is a double pinion type planetary gear mechanism. The first planetary gear unit 31 includes a sun gear S1, a ring gear R1, a plurality of inner pinions P1A, a plurality of outer pinions P1B, and a carrier CA1.

The sun gear S 1 is selectively connected to the input shaft 9 via the clutch C3. The sun gear S 1 is selectively connected to a housing via the one-way clutch F2 and the brake B3, and thus, the sun gear S1 is prevented from rotating in a reverse direction (i.e., a direction opposite to the direction of the rotation of the input shaft 9). The carrier CA1 is selectively connected to the housing via the brake B1. The carrier CA1 is constantly prevented from rotating in the reverse direction by the one-way clutch F1 provided in parallel with the brake B1. The ring gear R1 is integrally connected to the ring gear R2 of the second planetary gear unit 32. The ring gear R1 is selectively connected to the housing via the brake B2.

The second planetary gear unit 32 is a single pinion type planetary gear mechanism. The second planetary gear unit 32 includes a sun gear S2, the ring gear R2, a plurality of pinions P2. and a carrier CA2.

The sun gear S2 is integrally connected to the sun gear S3 of the third planetary gear unit 33. The sun gear S2 is selectively connected to the input shaft 9 via the clutch C4. The sun gear S2 is selectively connected to the input shaft 9 via the one-way clutch F0 and the clutch C1. Thus, the sun gear S2 is prevented from rotating in the reverse direction with respect to the direction of the rotation of the input shaft 9. The carrier CA2 is integrally connected to the ring gear R3 of the third planetary gear unit 33. The carrier CA2 is selectively connected to the input shaft 9 via the clutch C2, and selectively connected to the housing via the brake B4. The carrier CA2 is constantly prevented from rotating in the reverse direction by the one-way clutch F3 provided in parallel with the brake B4.

The third planetary gear unit 33 is a single pinion type planetary gear mechanism. The third planetary gear unit 33 includes a sun gear S3, a ring gear R3, a plurality of pinions P3, and a carrier CA3. The carrier CA3 is integrally connected to the output shaft 10.

Each of the clutches C1 to C4 and the brakes B1 to B4 is a wet type multiple disc friction engagement device that uses viscosity of oil.

The hydraulic pressure control device 40 separately engages/disengages each of the clutches C1 to C4 and the brakes B1 to B4 in the shift mechanism portion 30 so that the shift mechanism portion 30 shifts to an appropriate gear (one of first to sixth gears). Because the basic configuration of the hydraulic pressure control device 40 is known, the detailed illustration or description thereof will be omitted.

FIG. 3 shows the condition for shifting the shift mechanism portion 30 to each gear.

FIG. 3 is an engagement table showing the engaged state/disengaged state of each of the clutches C1 to C4, the brakes B1 to >34, and the one-way clutches F0 to F3 in the shift mechanism portion 30 at each gear. In this engagement table, a circle indicates that "the component is engaged", an X-mark indicates that "the component is disengaged", a double circle indicates that "the component is engaged when engine brake is applied". A triangle indicates that "the component is engaged only when the engine drives vehicle wheels".

The clutch C1 is referred to as "forward clutch (input clutch)". As shown in the engagement table in FIG. 3. the clutch C1 is engaged when the shift mechanism portion 30 shifts to one of forward gears so that the vehicle moves forward, that is, when one of positions other than a parking position (P), a reverse position (R), and a neutral position (N) is selected.

The engine control device 3 drives the engine 1 by controlling the air-fuel mixture supplied to the engine 1, and a combustion timing according to the traveling state of the vehicle.

The transmission control device 4 controls the hydraulic pressure control device 40 so that the shift mechanism portion 30 shifts to an appropriate gear, that is, an appropriate power transmission path is formed in the shift mechanism portion 30.

Although the engine control device 3 and the transmission control device 4 are not shown in detail in the drawings, each of the engine control device 3 and the transmission control device 4 is an ECU (Electronic Control Unit). The engine control device 3 and the transmission control device 4 are connected to each other so that information required for an engine control and a transmission control is transmitted between the engine control device 3 and the transmission control device 4.

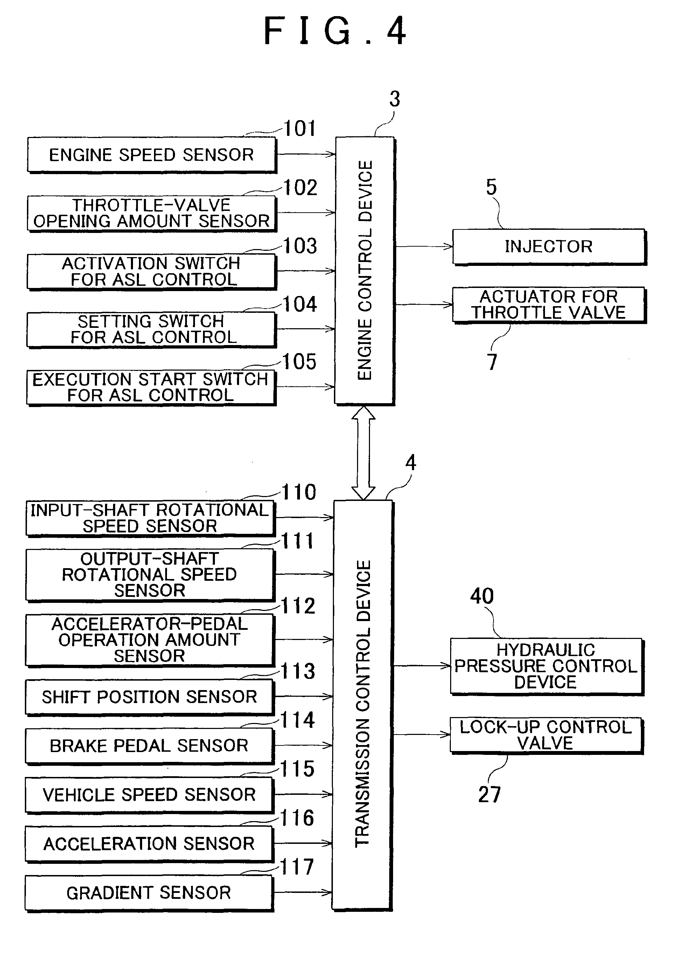

Next, the control apparatus for a vehicle according to the embodiment of the invention will be described in detail with reference to FIG. 4 to FIG. 8.

The control apparatus for a vehicle according to the embodiment includes the engine control device 3 and the transmission control device 4.

In summary, the control apparatus for a vehicle executes a deceleration flex lock-up control that is a deceleration increase control, and an adjustable speed limiter (ASL) control that is a vehicle speed adjustment control. The control apparatus is configured to improve the coordination of the both controls when the both controls are used.

The deceleration flex lock-up control is described in the above-described Japanese Patent Application Publications No. 2004-347004 (JP-A-2004-347004), No. 8-109962 (JP-A-8-109962), and the like. Therefore, the detailed description thereof is omitted. In summary, in the deceleration flex lock-up control, when the throttle valve 6 is in a substantially completely closed position, that is, an idling position, a fuel supply cutoff control and a slip control are executed. In the fuel supply cutoff control, supply of fuel to the engine 1 is stopped to reduce wasteful Fuel consumption during traveling of the vehicle. In the slip control, the engaged state of the lock-up clutch 26 is controlled to adjust a rate at which the engine speed is decreased, thereby extending a period during which the fuel supply is cutoff, and to appropriately apply an engine brake.

In the adjustable speed limiter control, when the vehicle speed is increased to a predetermined target vehicle speed according to need, a deceleration control is executed to decrease the vehicle speed. In addition, if the accelerator pedal 11 is continuously operated even after the vehicle speed reaches the target vehicle speed, a control for maintaining the vehicle speed at the target vehicle speed is executed.

In the embodiment, in the deceleration control and the control for maintaining the vehicle speed at the target vehicle speed, the opening amount of the throttle valve 6 for adjusting the amount of air taken into the engine 1 is controlled.

The adjustable speed limiter control is activated by turning on an activation switch 103 provided near a driver's seat in the vehicle. After the adjustable speed limiter control is activated, the target vehicle speed can be increased or decreased to any vehicle speed by operating a setting switch 104 provided near the driver's seat in the vehicle. After the target vehicle speed is set, the adjustable speed limiter control is executed by operating an execution start switch 105 provided near the driver's seat in the vehicle.

FIG. 4 is a schematic configuration diagram showing the control apparatus for a vehicle according to the embodiment (i.e., the engine control device 3 and the transmission control device 4).

The input interface of the engine control device 3 is connected to at least an engine speed sensor 101, a throttle-valve opening amount sensor 102, the activation switch 103 for the adjustable speed limiter control, the setting switch 104 for the adjustable speed limiter control, the execution start switch 105 for the adjustable speed limiter control, and the like.

The output interface of the engine control device 3 is connected to at least the injector 5, the actuator 7 for the throttle valve 6, and the like.

The engine speed sensor 101 detects the rotational speed of the crankshaft of the engine 1. The throttle-valve opening amount sensor 102 detects the opening amount of the throttle valve 6. The activation switch 103 activates the adjustable speed limiter control in response to the operation performed by a vehicle user. The setting switch 104 increases or decreases the target vehicle speed in the adjustable speed limiter control, in response to the operation performed by the vehicle user. The execution switch 105 starts the execution of the adjustable speed limiter control, in response to the operation performed by the vehicle user.

The input interface of the transmission control device 4 is connected to at least an input-shaft rotational speed sensor 110, an output-shaft rotational speed sensor 111, an accelerator-pedal operation amount sensor 112, a shift position sensor 113, a brake pedal sensor 114, a vehicle speed sensor 115, an acceleration sensor 116, a gradient sensor 117, and the like.

The output interface of the transmission control device 4 is connected to the constituent elements of the hydraulic pressure control device 40, the lock-up control valve 27 for controlling the hydraulic pressure for the lock-up clutch 26, and the like.

The input-shaft rotational speed sensor 110 detects the rotational speed of the input shaft 9. The output-shaft rotational speed sensor 111 detects the rotational speed of the output shaft 10. The accelerator-pedal operation amount sensor 112 detects the depression amount of the accelerator pedal 11. The shift position sensor 113 detects the position of a shift lever (a parking range P, a reverse range R, a neutral range N, and a drive range D). The brake pedal sensor 114 detects whether a brake pedal 12 is operated or not. The vehicle speed sensor 115 calculates the vehicle speed based on the rotational speed of a vehicle wheel. The acceleration sensor 116 detects the acceleration in the longitudinal direction of the vehicle and the acceleration in the lateral direction of the vehicle. The gradient sensor 117 detects the inclination of the vehicle.

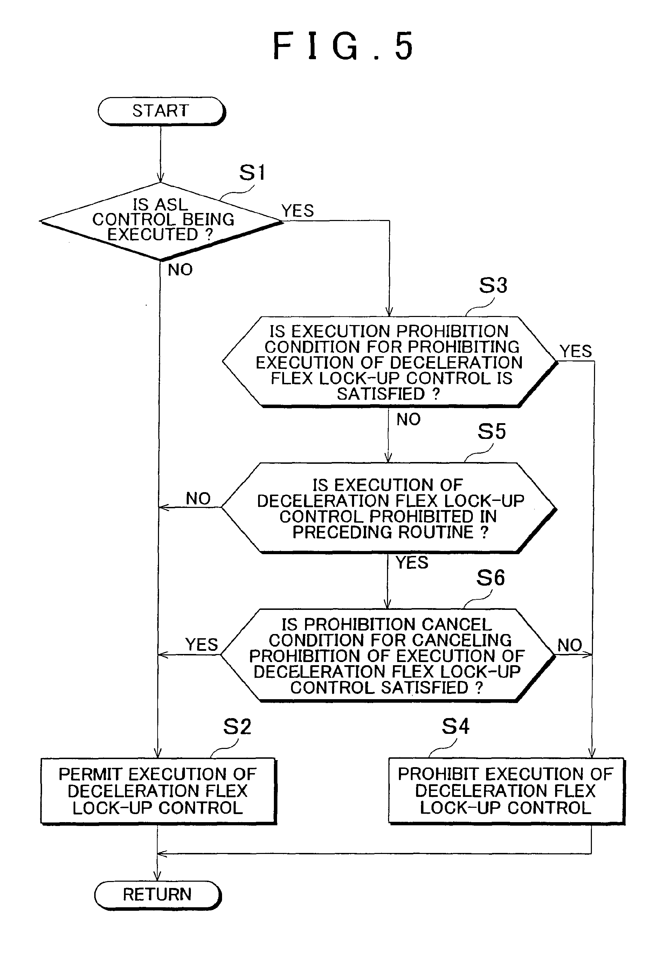

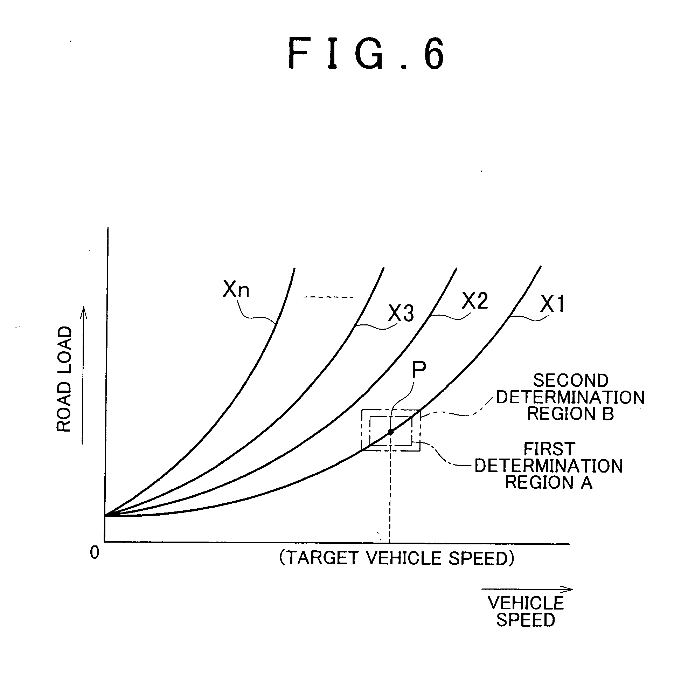

Next, the controls executed by the engine control device 3 and the transmission control device 4 according to the embodiment will be described in detail with reference to FIG. 5 and FIG. 6.

In summary, in the embodiment, when it is determined that there is a possibility that hunting, in which execution and stop of the deceleration flex lock-up control are repeated, may be caused during the adjustable speed limiter control, the execution of the deceleration flex lock-up control is prohibited.

FIG. 5 is a flowchart used to describe the operation to which the features of the invention are applied. FIG. 6 is a graph showing a map in which the vehicle speed and the gradient of a traveling road are used as parameters, and vehicle speed-road load curves X1 to Xn are set.

The routine shown by the flowchart in FIG. 5 is executed at constant time intervals during the adjustable speed limiter control. First, in step S1, it is determined whether the adjustable speed limiter control is being executed. This determination in step S1 is performed by checking whether the value of an ASL flag provided in the engine control device 3 is "1" or "0".

When the execution start switch 105 is turned on, and thus, the adjustable speed limiter control is executed, the ASL flag is set to "1". When the execution start switch 105 is turned off, and thus, the adjustable speed limiter control is stopped, the ASL flag is set to "0".

When the adjustable speed limiter control is not being executed, a negative determination is made in step S1, and then, the execution of the deceleration flex lock-up control is permitted in step S2. Then, the routine shown by the flowchart is finished.

However, when the adjustable speed limiter control is being executed, an affirmative determination is made in step S1. Then, the routine proceeds to step S3.

In step S3, it is determined whether an execution prohibition condition for prohibiting the execution of the deceleration flex lock-up control is satisfied in the current traveling state.

More specifically, in step S3, it is determined whether there is a possibility that the hunting, in which the execution and stop of the deceleration flex lock-up control are repeated, may be caused, to maintain the current vehicle speed, which is determined based on the output from the vehicle speed sensor 115, at the target vehicle speed. Thus, it is determined whether the execution prohibition condition is satisfied.

Note that, when the deceleration control is executed by placing the throttle valve 6 in the idling position, the deceleration flex lock-up control is triggered by placing the throttle valve 6 in the idling position. The deceleration flex lock-up control is stopped due to switching from the deceleration control to the acceleration control. If the execution and stop of the deceleration flex lock-up control are repeated, the vehicle speed and torque (drive power) fluctuate greatly (i.e., by a great extent) in a short cycle, which is undesirable.

An example of a method for determining whether there is a possibility that the hunting may be caused will be described with reference to FIG. 6.

Map data as shown in the graph in FIG. 6 is written in the storage area of the engine control device 3 in advance. In the map data, the vehicle speed and the gradient of the traveling road are used as parameters, and the vehicle speed-road load curves X1 to Xn are set. Further, a first determination region A and a second determination region B are set at each of points in intervals of a predetermined vehicle speed (for example, 1 km/h) on each of the curves X1 to Xn. The first determination region A and the second determination region B are empirically set through experiment or the like. Each of the first determination region A and the second determination region B is represented by a rectangular frame in which each point is positioned at a center thereof. The shape of the frame is not limited to a rectangular shape. That is, the frame may have other shapes such as a circular shape.

The first determination region A is used as a condition for determining whether the execution of the deceleration flex lock-up control is permitted or prohibited. The first determination region A is set in a range where the hunting of the deceleration flex lock-up control may be caused.

The second determination region B is used as a condition for determining whether the prohibition of the execution of the deceleration flex lock-up control should be cancelled, that is, the execution of the deceleration flex lock-up control should be permitted again. The second determination region B is appropriately set to be larger than the first determination region A so that a hysteresis effect is obtained to prevent the phenomenon in which the result of the determination as to whether the prohibition of the execution of the deceleration flex lock-up control should be cancelled is frequently inverted in response to a small change in the vehicle speed (including an error in measurement performed by the vehicle speed sensor 115).

The process in step S3 will be described in detail. One of the curves X1 to Xn, which is appropriate for the current traveling state, is extracted from the storage area based on the output from the gradient sensor 117 according to need. In addition, the first determination region A and the second determination region B around the position P of the target vehicle speed for maintaining the vehicle speed on the extracted curve (for example, the curve X1) are extracted. The target vehicle speed for maintaining the vehicle speed is input by operating the setting switch 104 for adjusting the vehicle speed. Then, it is determined whether a point indicating the current vehicle speed, which is determined based on the output from the vehicle speed sensor 115, is positioned in the first determination region A.

When the point indicating the current vehicle speed is in the first determination region A, an affirmative determination is made in step S3, and then, the execution of the deceleration flex lock-up control is prohibited in step S4. Then, the routine shown by the flowchart is finished.

However, when the point indicating the current vehicle speed is outside the first determination region 1, a negative determination is made in step S3, and then, the routine proceeds to step S5.

The point indicating the current vehicle speed is outside the first determination region A, for example, when the vehicle speed is increasing, and the point indicating the vehicle speed will enter the first determination region A, or when the vehicle speed is decreasing, and the point indicating the vehicle speed has moved out of the first determination region A. Thus, steps S5 and S6 described below are executed to determine whether the point indicating the vehicle speed will enter the first determination region A, or the point indicating the vehicle speed has moved out of the first determination region A.

In step S5, it is determined whether there is a history showing that the execution of the deceleration flex lock-up control is prohibited in a preceding routine during the adjustable speed limiter control.

The determination in step S5 is performed by checking whether the value of a history flag is "1" or "0". The history flag, provided in the engine control device 3, indicates that the execution of the deceleration flex lock-up control is prohibited.

When the execution of the deceleration flex lock-up control is prohibited in step S4, the history flag is set to "1". When the execution of the deceleration flex lock-up control is permitted in step S2, and when the execution of the adjustable speed limiter control itself is stopped, the history flag is set to "0".

When the execution of the deceleration flex lock-up control is not prohibited in the preceding routine, a negative determination is made in step S5, and then, the execution of the deceleration flex lock-up control is permitted in step S2. Then, the routine shown by the flowchart is finished. When a negative determination is made in step S5, it is considered that the point indicating the current vehicle speed is outside the first determination region A, because the vehicle speed is increasing, and the point indicating the vehicle speed will enter the first determination region A, as described above.

However, when the execution of the deceleration flex lock-up control is prohibited, an affirmative determination is made in step S5, and then, the routine proceeds to step S6. When an affirmative determination is made in step S5, it is considered that the point indicating the current vehicle speed is outside the first determination region A, because the vehicle speed is decreasing, and the point indicating the vehicle speed has moved out of the first determination region A, as described above.

In step S6, it is determined whether a prohibition cancel condition for canceling the prohibition of the execution of the deceleration flex lock-up control is satisfied in the current traveling state.

More specifically, in step S6, the second determination region B set on the curve extracted in step S3 (for example, the curve X1) is selected as a determination condition, and it is determined whether the point indicating the current vehicle speed determined based on the output from the vehicle speed sensor 115 is outside the second determination region B.

When the point indicating the current vehicle speed is outside the second determination region B, an affirmative determination is made in step S6, and then, the execution of the deceleration flex lock-up control is permitted in step S2. Then, the routine shown by the flowchart is finished.

However, when the point indicating the current vehicle speed is in the second determination region B, a negative determination is made in step S6, and then, the execution of the deceleration flex lock-up control is prohibited in step S4. Then, the routine shown by the flowchart is finished.

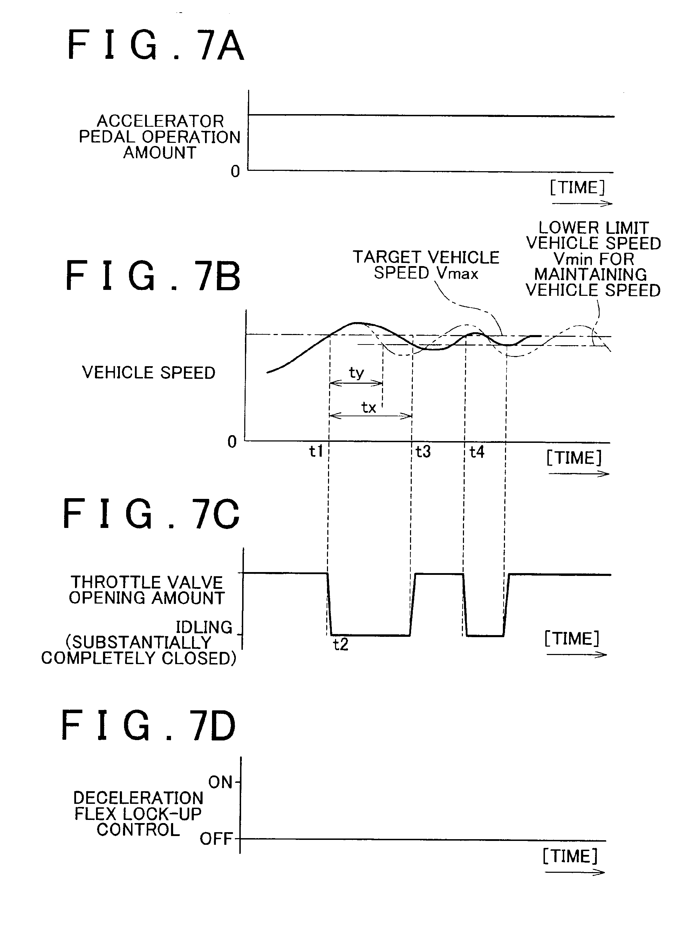

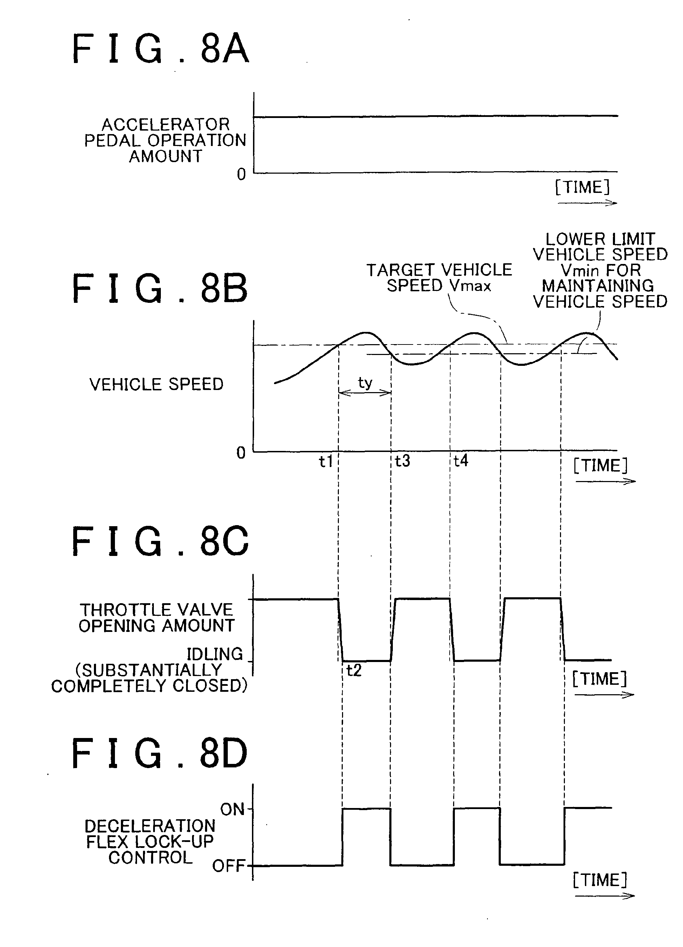

In addition to the description of the operations in the control, the situation where the adjustable speed limiter control is executed during the traveling of the vehicle will be described using time charts shown in FIGS. 7A to 7D, and FIGS. 8A to 8D.

FIGS. 7A to 7D are time charts used to describe the operations of the control apparatus for a vehicle according to the embodiment of the invention. FIG.S 8A to 8D are time charts used to describe the operations in a comparative example. The vehicle speed in the comparative example is shown by the two-dot chain line in FIG. 7B to facilitate understanding of the description.

In the operations in the comparative example, when the accelerator pedal is operated during the adjustable speed limiter control as shown in FIG. 8A, the vehicle speed is gradually increased as shown in FIG. 8B. However, when the vehicle speed reaches a target vehicle speed Vmax at time point t1, the throttle valve 6 is placed in the substantially completely closed position (idling position) as shown in FIG 8C.

Thus, the vehicle speed starts to be decreased. However, for example, when the throttle valve 6 is placed in the idling position at time point t2 that is later than time point t1 (i.e., the time point at which an instruction to operate the throttle valve 6 is output) by a time during which the throttle valve 6 is operated, the deceleration flex lock-up control is executed, and accordingly, the deceleration of the vehicle speed is increased.

Then, when the vehicle speed is decreased to a lower limit vehicle speed Vmin for maintaining the vehicle speed at time point t3 as shown in FIG. 8B, the throttle valve 6 is opened according to the depression amount of the accelerator pedal 11 (i.e.. the operation amount of the accelerator pedal 11) by the adjustable speed limiter control as shown in FIG. 8C. Thus, the vehicle is accelerated.

Accordingly, the vehicle speed is increased. When the vehicle speed reaches the target vehicle speed Vmax again at time point t4 as shown in FIG. 8B, the throttle valve 6 is placed in the substantially closed position (idling position) as shown in FIG. 8C. At this time as well, the deceleration flex lock-up control is triggered by placing the throttle valve 6 in the idling position.

Thus, when the deceleration control and the acceleration control are repeated by controlling the opening amount of the throttle valve 6 during the process for maintaining the vehicle speed at the target vehicle speed, the actual vehicle speed repeatedly overshoots and undershoots the target vehicle speed Vmax, and gradually converges to the target vehicle speed Vmax. In the above-described comparative example, the deceleration flex lock-up control is triggered by placing the throttle valve 6 in the idling position during the deceleration control. This increases the rate at which the vehicle speed is decreased, and decreases a time ty (refer to FIG 8B) required for the vehicle speed to reach the lower limit vehicle speed Vmin for maintaining the vehicle speed, and increases the amount of undershoot.

Therefore, for example, the deceleration control and the acceleration control are repeated in a short cycle to maintain the vehicle speed at the target vehicle speed Vmax, and it is difficult to make the vehicle speed converge to the target vehicle speed Vmax. Thus, the hunting of the deceleration flex lock-up control is continuously caused, and the vehicle speed and the torque continuously fluctuate for a long time.

In contrast, in the operations oF the control apparatus for a vehicle according to the embodiment, when the actual vehicle speed reaches the target vehicle speed Vmax at time point t1 as shown in FIG. 7B, the point showing the actual vehicle speed is in the first determination region A in FIG. 6. Therefore, the instruction to place the throttle valve 6 in the substantially completely closed position (idling position) is output, and the execution of the deceleration flex lock-up control is prohibited.

Accordingly, when the throttle valve 6 is placed in the substantially completely closed position (idling position) at time point t2 that is later than time point t1 (i.e., the time point at which the instruction to operate the throttle valve 6 is output) by the time during which the throttle valve 6 is operated, as shown in FIG. 7C, the execution of the deceleration flex lock-up control has already been prohibited. Thus, although the vehicle speed is decreased by actually placing the throttle valve 6 in the idling position, the deceleration is smaller than the deceleration in the comparative example.

Thus, as shown in FIG. 7B, a time tx required for the actual vehicle speed to decrease to the lower limit vehicle speed Vmin for maintaining the vehicle speed is long, and the amount of undershoot is small, as compared to the comparative example. Therefore, the vehicle speed converges to the target vehicle speed Vmax in a relatively early stage. As well as the vehicle speed, the torque (drive power) slowly fluctuates to a small extent.

As evident from the above description of the operations, the engine control device 3 and the transmission control device 4 function as the deceleration increase control means, the vehicle speed adjustment control means, and the management means. The processes in steps S1 to S6 in the above-described control are regarded as the process executed by the management means.

The engine control device 3 executes/stops the fuel supply cutoff control, by controlling the injector 5. Also, when the engine control device 3 transmits the instruction to the transmission control device 4, the transmission device 4 is triggered to execute the slip control for the lock-up clutch 26 by controlling the lock-up control valve 27. Accordingly, the engine control device 3 and the transmission control device 4 function as the deceleration increase control means.

Further, the engine control device 3 controls the opening amount of the throttle valve 6 by controlling the actuator 7, when the deceleration control and the acceleration control are executed during the adjustable speed limiter control. Therefore, the engine control device 3 functions as the vehicle speed adjustment control means.

Thus, it is evident that the control apparatus for a vehicle according to the invention includes both of the engine control device 3 and the transmission control device 4.

As described above, according to the embodiment, when it is determined that there is a possibility that the hunting of the deceleration flex lock-up control may be caused during the adjustable speed limiter control, the execution of the deceleration flex lock-up control is prohibited.

That is, when the deceleration control is executed by placing the throttle valve 6 in the idling position during the process for maintaining the vehicle speed at the target vehicle speed by the adjustable speed limiter control, the execution of the deceleration flex lock-up control is prohibited.

Thus, although the deceleration control and the acceleration control are repeated during the process for maintaining the vehicle speed at the target vehicle speed by the adjustable speed limiter control, the repetition of the deceleration control and the acceleration control is stopped quickly as compared to the case where the execution of the deceleration flex lock-up control is permitted during the deceleration control.

Therefore, it is possible to stop the fluctuations of the vehicle speed and the torque (drive power) as quickly as possible during the process for maintaining the vehicle speed at the target vehicle speed. As a result, the behavior of the vehicle is stabilized, and good driveability is provided.

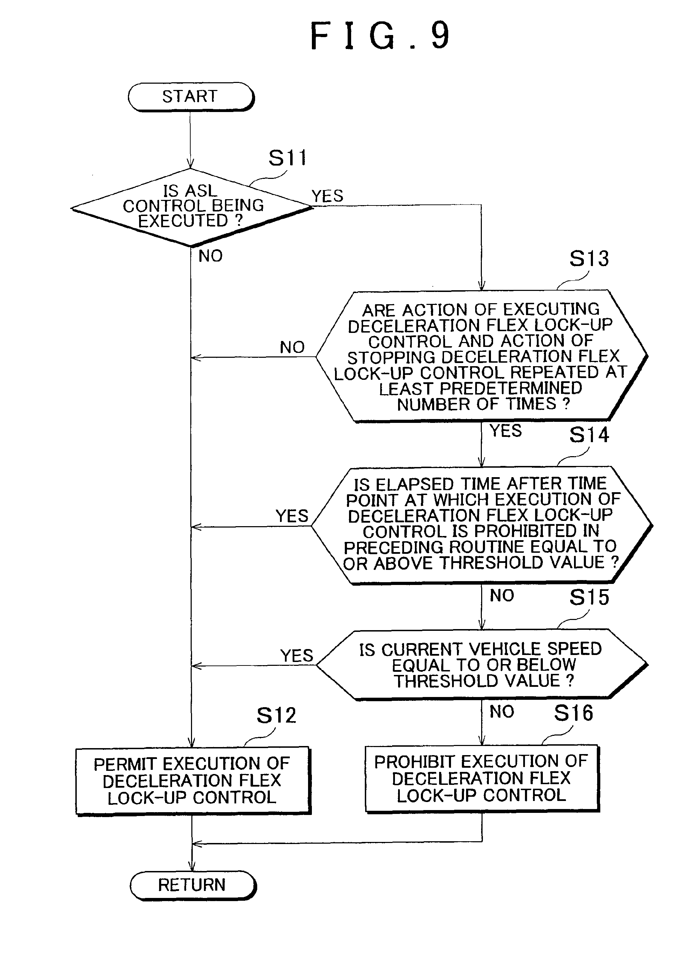

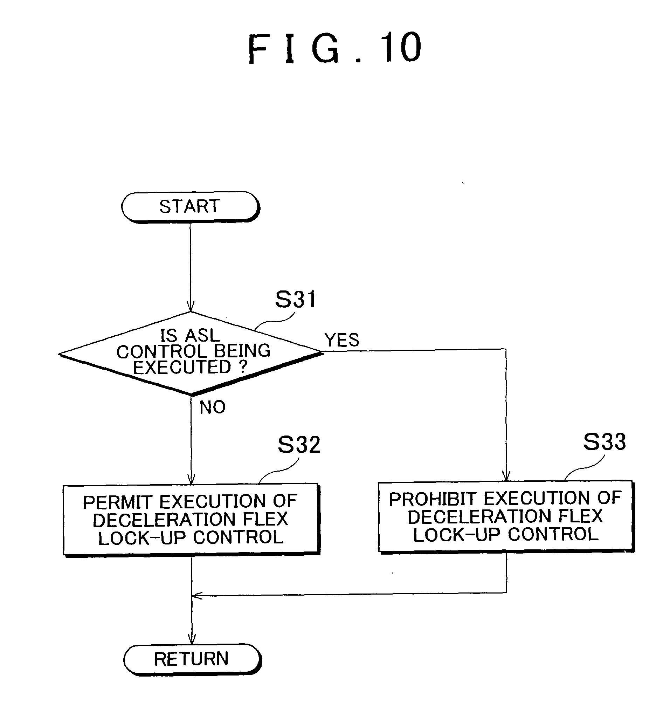

Note that, the invention is not limited to the above-described embodiment. All modifications and all changes which come within the meaning and range of equivalency of the claims are intended to be embraced therein. Hereinafter, other embodiments of the invention will be described.
(1) In the above-described embodiment, the shift mechanism portion 30 includes at least the three planetary gear units 31 to 33. However, the shift mechanism portion 30 may be a gear mechanism that includes a plurality of gear trains, a belt type continuously variable transmission, or the like. Also, the shift mechanism portion 30 has six forward gears. However, the number of gears of the shift mechanism portion 30 is not limited to a specific number.
(2) In the above-described embodiment, the opening amount of the throttle valve 6 is controlled to execute the adjustable speed limiter control. However, the amount of fuel injected from the injector 5 may be controlled to execute the adjustable speed limiter control. It is preferable that the throttle valve 6 should be controlled to execute the adjustable speed limiter control in the case of a gasoline engine, and it is preferable that the injector 5 should be controlled to execute the adjustable speed limiter control in the case of a diesel engine.
   In the embodiment where the amount of fuel injected from the injector 5 is controlled, if it is determined that a condition for stopping the injection of fuel from the injector 5 is satisfied during the adjustable speed limiter control, the execution of the deceleration flex lock-up control may be prohibited.
(3) In the above-described embodiment, the condition for prohibiting the execution of the deceleration flex lock-up control during the adjustable speed limiter control may be set as described below.
   In summary, in this embodiment, for example, when it is determined that the hunting, in which the execution and stop of the deceleration flex lock-up control are repeated, is actually caused during the adjustable speed limiter control, the execution of the deceleration flex lock-up control is prohibited.
   The operations in this embodiment will be described more specifically with reference to a flowchart in FIG. 9.
   The routine shown by the flowchart in FIG. 9 is executed in constant time intervals during the adjustable speed limiter control.
   First, in step S11, it is determined whether the adjustable speed limiter control is being executed. The determination in step S11 is performed by checking whether the value of the ASL flag provided in the engine control device 3 is "1" or "0".
   When the execution start switch 105 is turned on, and thus, the adjustable speed limiter control is executed, the ASL flag is set to "1". When the execution start switch 105 is turned off, and thus, the adjustable speed limiter control is stopped, the ASL flag is set to "0".
   When the adjustable speed limiter control is not being executed, a negative determination is made in step S11, and then, the execution of the deceleration flex lock-up control is permitted in step S12. Then, the routine shown by the flowchart is finished.
   However, when the adjustable speed limiter control is being executed, an affirmative determination is made in step S 11. Then, the routine proceeds to step S13.
   In step S13, it is determined whether the action of executing the deceleration flex lock-up control and the action of stopping the deceleration flex lock-up control are repeated at least a predetermined number of times (i.e., whether the number of times that the actions are repeated is equal to or above the predetermined number of times). Step S13 is executed to detect the initial stage of the hunting of the deceleration flex lock-up control.
   An example of the case where the hunting of the deceleration flex lock-up control is caused will be described. That is, for example, when the vehicle speed is increased to the target vehicle speed Vmax during the adjustable speed limiter control, the throttle valve 6 is placed in the substantially completely closed position, that is, in the idling position to decrease the vehicle speed. The deceleration flex lock-up control is triggered by placing the throttle valve 6 in the idling position. This increases the deceleration, and therefore, increases the rate at which the vehicle speed is decreased. If the accelerator pedal 5 is continuously operated when the vehicle speed is decreased to the lower limit vehicle speed for maintaining the vehicle speed, the deceleration flex lock-up control is stopped, and the acceleration control is executed to increase the opening amount of the throttle valve 6 according to the depression amount of the accelerator pedal 5, and thus, the vehicle speed is increased toward the target vehicle speed Vmax.
   The determination in step S13 is performed by checking a count value N of a counter provided in the transmission control device 4.
   When the transmission control device 4 executes the deceleration flex lock-up control, the counter value N is incremented (N → N + 1). Also, when the transmission control device 4 stops the deceleration flex lock-up control, the counter value N is incremented (N → N + 1). The reference value used for the determination in step S13 is empirically set through experiment or the like.
   When the number of times that the action of executing the deceleration flex lock-up control and the action of stopping the deceleration flex lock-up control are repeated is equal to or above the predetermined number of times, an affirmative determination is made in step S 13. Then, the routine proceeds to step S14. However, when the number of times that the actions are repeated is less than the predetermined number of times, a negative determination is made in step S13, and then, the execution of the deceleration flex lock-up control is permitted in step S12. Then, the routine shown by the flowchart is finished.
   In step S14, it is determined whether an elapsed time after the time point at which the execution of the deceleration flex lock-up control is prohibited in a preceding routine is equal to or above a threshold value.
   When the elapsed time after the time point at which the execution of the deceleration flex lock-up control is prohibited in the preceding routine is equal to or above the threshold value, an affirmative determination is made in step S 14, and then, the execution of the deceleration flex lock-up control is permitted in step S 12. Then, the routine shown by the flowchart is finished.
   However, when the elapsed time after the time point at which the execution of the deceleration flex lock-up control is prohibited in the preceding routine is below the threshold value, a negative determination is made in step S14, and then, it is determined whether the current vehicle speed is equal to or below a threshold value in step S15.
   When the current vehicle speed is equal to or below the threshold value, an affirmative determination is made in step S15, and then, the execution of the deceleration flex lock-up control is permitted in step S12. Then, the routine shown by the flowchart is finished.
   However, when the current vehicle speed is above the threshold value, a negative determination is made in step S15, and then, the execution of the deceleration flex lock-up control is prohibited in step S16. Then, the routine shown by the flowchart is finished.
   As described above, in the embodiment, it is checked whether the hunting of the deceleration flex lock up control is actually caused during the adjustable speed limiter control. When the hunting is actually caused, the execution of the deceleration flex lock-up control is prohibited thereafter.
   Thus, although the occurrence of the hunting of the deceleration flex lock-up control is permitted only in a short period during the adjustable speed limiter control, it is possible to accurately determine the timing at which the execution of the deceleration flex lock-up control should be prohibited, and to quickly stop the hunting of the deceleration flex lock-up control.
   Particularly, when the predetermined number of times, which is used as the condition for detecting the hunting of the deceleration flex lock-up control, is set to the smallest possible number of times, the hunting of the deceleration flex lock-up control is stopped relatively quickly during the process for detecting the hunting.
(4) In the above-described embodiment, the condition for prohibiting the execution of the deceleration flex lock-up control during the adjustable speed limiter control may be set as described below.
   In summary, in this embodiment, for example, when the adjustable speed limiter control is executed, the execution of the deceleration flex lock-up control is prohibited.
   The operations in this embodiment will be described more specifically with reference to a flowchart in FIG. 10.
   The routine shown by the flowchart in FIG. 10 is executed in constant time intervals during the adjustable speed limiter control.
   First, in step S31, it is determined-whether the adjustable speed limiter control is being executed. The determination in step S31 is performed by checking whether the value of the ASL flag provided in the engine control device 3 is "1" or "0".
   When the execution start switch 105 is turned on, and thus, the adjustable speed limiter control is executed, the ASL flag is set to "1". When the execution start switch 105 is turned off, and thus, the adjustable speed limiter control is stopped, the ASL flag is set to "0".
   When the adjustable speed limiter control is not being executed, a negative determination is made in step S31, and then, the execution of the deceleration flex lock-up control is permitted in step S32. Then, the routine shown by the flowchart is finished.
   However, when the adjustable speed limiter control is being executed, an affirmative determination is made in step S31, and then, the execution of the deceleration flex lock-up control is prohibited in step S33. Then, the routine shown by the flowchart is finished.
   As described above, in the embodiment, the execution of the flex lock-up control is prohibited during the entire period in which the adjustable speed limiter control is executed.
   Thus, although the deceleration control and the acceleration control are repeated during the process for maintaining the vehicle speed at the target vehicle speed, the execution of deceleration flex lock-up control is prohibited when the deceleration control is executed by placing the throttle valve 6 in the substantially completely closed position, that is, the idling position. Therefore, it is possible to stop the repetition of the deceleration control and the acceleration control relatively quickly.
   Accordingly, it is possible to stop the fluctuations of the vehicle speed and the torque in a short period, as compared to, for example, the case where the execution of the deceleration flex lock-up control is permitted during the adjustable speed limiter control. As a result, the behavior of the vehicle is stabilized, and good driveability is provided.
(5) In each of the above-described embodiments, the deceleration flex lock-up control is executed as the deceleration increase control. However, for example, only the fuel supply cutoff control, or the slip control for the lock-up clutch 26 may be executed as the deceleration increase control.
   In summary, when only the fuel supply cutoff control is executed as the deceleration increase control, all that needs to be done is to replace the '`deceleration flex lock-up control" with "the fuel supply cutoff control" in the control operations in each of the above-described embodiments.
   When the slip control for the lock-up clutch 26 is executed as the deceleration increase control, all that needs to be done is to replace "the deceleration flex lock-up control" with "the slip control for the lock-up clutch 26" in the control operations in each of the embodiments.
(6) In the above-described embodiments, the adjustable speed limiter control, in which the target vehicle speed can be adjusted to any vehicle speed, is executed as the vehicle speed adjustment control. However, the vehicle speed adjustment control may be a speed limiter control in which the target vehicle speed is not adjusted, an automatic cruise control, or the like.

As generally known, the automatic cruise control maintains the vehicle speed at the target vehicle speed without the need of operating the accelerator pedal 11, according to request.

## Claims

1. A control apparatus for a vehicle with an automatic transmission (2),
**characterized by** comprising:
deceleration increase control means for executing a deceleration increase control that increases deceleration according to need, when the vehicle is decelerated;
vehicle speed adjustment control means for executing a vehicle speed adjustment control that includes a deceleration control and an acceleration control to maintain a vehicle speed at a predetermined target vehicle speed, according to a request; and
management means for prohibiting execution of the deceleration increase control, when an execution prohibition condition for prohibiting the execution of the deceleration increase control is satisfied during the vehicle speed adjustment control executed by the vehicle speed adjustment control means, wherein:
the execution prohibition condition is satisfied based on hunting, in which the execution and stop of the deceleration increase control are repeated.

2. The control apparatus according to claim 1, wherein the execution prohibition condition is satisfied, when the management means determines that there is a possibility that the hunting may be caused, based on a current vehicle speed and a current road load.

3. The control apparatus according to claim 2, wherein:
when the management means determines that there is no possibility that the hunting may be caused, the management means checks whether there is a history showing that the execution of the deceleration increase control has been prohibited during current execution of the vehicle speed adjustment control;
when the management means determines that there is the history showing that the execution of the deceleration increase control has been prohibited during the current execution of the vehicle speed adjustment control, the management means checks whether a predetermined prohibition cancel condition for canceling prohibition of the execution of the deceleration increase control is satisfied;
when the predetermined prohibition cancel condition is satisfied, the management means cancels the prohibition of the execution of the deceleration increase control; and
when the predetermined prohibition cancel condition is not satisfied, the management means continues to prohibit the execution of the deceleration increase control.

4. The control apparatus according to claim 1. wherein the execution prohibition condition is satisfied, when the management means determines that an action, in which the deceleration increase control is executed due to the deceleration control during the vehicle speed adjustment control, and then the deceleration increase control is stopped due to switching from the deceleration control to the acceleration control, is repeated at least a predetermined number of times.

5. A control apparatus for a vehicle with an automatic transmission (2),
**characterized by** comprising:
deceleration increase control means for executing a deceleration increase control that increases deceleration according to need, when the vehicle is decelerated;
vehicle speed adjustment control means for executing a vehicle speed adjustment control that includes a deceleration control and an acceleration control to maintain a vehicle speed at a predetermined target vehicle speed, according to a request; and
management means for prohibiting execution of the deceleration increase control, when an execution prohibition condition for prohibiting the execution of the deceleration increase control is satisfied during the vehicle speed adjustment control executed by the vehicle speed adjustment control means, wherein:
the execution prohibition condition is satisfied, when the vehicle speed adjustment control is executed.

6. The control apparatus according to any one of claims 1 to 5, wherein:
the automatic transmission (2) includes a torque converter (20) provided with a lock-up clutch (26);
the deceleration increase control means executes a deceleration flex lock-up control; and
in the deceleration flex lock-up control, when the vehicle is decelerated, a fuel supply cutoff control is executed to stop supply of fuel to an engine (1) of the vehicle, and a slip control for the lock-up clutch (26) is executed to control a rate at which an engine speed is decreased, and when the engine speed is decreased to a predetermined threshold value, the fuel supply cutoff control and the slip control are stopped.

7. The control apparatus according to any one of claims 1 to 6, wherein:
when the vehicle speed reaches the predetermined target vehicle speed during a process in which the vehicle speed is increased due to an operation of an accelerator pedal (11) of the vehicle, the vehicle speed adjustment control means executes the deceleration control to decrease the vehicle speed; and
if the accelerator pedal (11) is continuously operated when the vehicle speed is decreased to a lower limit vehicle speed for maintaining the vehicle speed, which is set to be lower than the target vehicle speed, due to the deceleration control, the vehicle speed adjustment control means executes the acceleration control to increase the vehicle speed to the target vehicle speed according to an operation amount of the accelerator pedal (11).

8. The control apparatus according to any one of claims 1 to 7, wherein the vehicle speed adjustment control means executes the deceleration control and the acceleration control by controlling a throttle valve (6) that adjusts an amount of air taken into an engine (1) of the vehicle.

9. The control apparatus according to any one of claims 1 to 7, wherein the vehicle speed adjustment control means executes the deceleration control and the acceleration control by controlling an injector (5) that adjusts an amount of fuel supplied to an engine
(1) of the vehicle.

10. A control method for a vehicle with an automatic transmission (2),
**characterized by** comprising:
executing a deceleration increase control that increases deceleration according to need, when the vehicle is decelerated;
executing a vehicle speed adjustment control that includes a deceleration control and an acceleration control to maintain a vehicle speed at a predetermined target vehicle speed, according to a request; and
prohibiting execution of the deceleration increase control, when an execution prohibition condition for prohibiting the execution of the deceleration increase control is satisfied during the vehicle speed adjustment control, wherein:
the execution prohibition condition is satisfied based on hunting, in which the execution and stop of the deceleration increase control are repeated.

11. The control method according to claim 10, wherein the execution prohibition condition is satisfied, when it is determined that there is a possibility that the hunting may be caused, based on a current vehicle speed and a current road load.

12. The control method according to claim 11, **characterized by** further comprising:
checking whether there is a history showing that the execution of the deceleration increase control has been prohibited during current execution of the vehicle speed adjustment control, when it is determined that there is no possibility that the hunting may be caused;
checking whether a predetermined prohibition cancel condition for canceling prohibition of the execution of the deceleration increase control is satisfied, when it is determined that there is the history showing that the execution of the deceleration increase control has been prohibited during the current execution of the vehicle speed adjustment control;
canceling the prohibition of the execution of the deceleration increase control, when the predetermined prohibition cancel condition is satisfied; and
continuing to prohibit the execution of the deceleration increase control, when the predetermined prohibition cancel condition is not satisfied.

13. The control method according to claim 10, wherein the execution prohibition condition is satisfied, when it is determined that an action, in which the deceleration increase control is executed due to the deceleration control during the vehicle speed adjustment control, and then the deceleration increase control is stopped due to switching from the deceleration control to the acceleration control, is repeated at least a predetermined number of times.

14. A control method for a vehicle with an automatic transmission (2), **characterized by** comprising:
executing a deceleration increase control that increases deceleration according to need, when the vehicle is decelerated;
executing a vehicle speed adjustment control that includes a deceleration control and an acceleration control to maintain a vehicle speed at a predetermined target vehicle speed, according to a request; and
prohibiting execution of the deceleration increase control, when an execution prohibition condition for prohibiting the execution of the deceleration increase control is satisfied during the vehicle speed adjustment control, wherein:
the execution prohibition condition is satisfied, when the vehicle speed adjustment control is executed.

15. The control method according to any one of claims 10 to 14, wherein:
the automatic transmission (2) includes a torque converter (20) provided with a lock-up clutch (26);
the deceleration increase control is executed by executing a deceleration flex lock-up control; and
in the deceleration flex lock-up control, when the vehicle is decelerated, a fuel supply cutoff control is executed to stop supply of fuel to an engine (1) of the vehicle, and a slip control for the lock-up clutch (26) is executed to control a rate at which an engine speed is decreased, and when the engine speed is decreased to a predetermined threshold value, the fuel supply cutoff control and the slip control are stopped.

16. The control apparatus according to any one of claims 10 to 15, wherein:
in the vehicle speed adjustment control, when the vehicle speed reaches the predetermined target vehicle speed during a process in which the vehicle speed is increased due to an operation of an accelerator pedal (11) of the vehicle, the deceleration control is executed to decrease the vehicle speed; and
if the accelerator pedal (11) is continuously operated when the vehicle speed is decreased to a lower limit vehicle speed for maintaining the vehicle speed, which is set to be lower than the target vehicle speed, due to the deceleration control, the acceleration control is executed to increase the vehicle speed to the target vehicle speed according to an operation amount of the accelerator pedal (11).

17. The control apparatus according to any one of claims 10 to 16, wherein the deceleration control and the acceleration control of the vehicle speed adjustment control are executed by controlling a throttle valve (6) that adjusts an amount of air taken into an engine (1) of the vehicle.

18. The control apparatus according to any one of claims 10 to 16, wherein the deceleration control and the acceleration control of the vehicle speed adjustment control are executed by controlling an injector (5) that adjusts an amount of fuel supplied to an engine (1) of the vehicle.
